# EUROPEAN PATENT APPLICATION

(11) **EP 4 553 936 A1**
(43) Date of publication of application: **14.05.2025**
(21) Application number: 23852377.3
(22) Date of filing: 26.07.2023
(51) Int. Cl.: H01M 10/04, H01G 11/12, H01G 11/78, H01G 11/80, H01M 10/052, H01M 10/058, H01M 50/103, H01M 50/184, H01M 50/186, H01M 50/191, H01M 50/193, H01M 50/197

(54) **ELECTRIC POWER STORAGE MODULE**

(30) Priority: 12.08.2022 JP 2022129076
(71) Applicant: KABUSHIKI KAISHA TOYOTA JIDOSHOKKI, Kariya-shi, Aichi 448-8671 (JP)
(72) Inventor: OKAYAMA Yasuaki, Kariya-shi, Aichi 448-8671 (JP); NAKAMURA Tomohiro, Kariya-shi, Aichi 448-8671 (JP); HIROSE Takayuki, Kariya-shi, Aichi 448-8671 (JP); SAKAMOTO Shunya, Kariya-shi, Aichi 448-8671 (JP)
(74) Representative: TBK
(86) International application number: PCT/JP2023/027384
(87) International publication number: WO 2024/034403

(57) **Abstract**

An electric power storage module including: an electrode stack including a plurality of electrodes each including a current collector, the electrodes being stacked along a first direction; a first resin portion provided to the electrode stack such that an internal space is formed between each of the current collectors adjacent in the first direction, the first resin portion sealing the internal space; and a sealing body joined to the first resin portion, in which the first resin portion has an outer surface including: a first end face in the first direction; a second end face opposite the first end face in the first direction; and four outer side faces extending along the first direction such that the first end face and second end face are connected.

## Description

### Technical Field

The present disclosure relates to an electric power storage module.

### Background Art

Patent Literature 1 describes a bipolar secondary battery. The power generating element of the bipolar secondary battery has a plurality of bipolar electrodes each including a current collector having a face that is provided with a positive active material layer electrically coupled to the face and another face that is provided with a negative active material layer electrically coupled to the other face and is opposite the face across the current collector. The bipolar electrodes are each stacked through the corresponding electrolyte layer to form the power generating element. The positive active material layer, the electrolyte layer, and the negative active material layer that are adjacent constitute a single battery cell layer. The single battery cell layer has an outer peripheral portion with a seal portion disposed thereon. Each seal portion is disposed between the corresponding current collectors on the respective peripheral edge portions of the current collectors to prevent contact between the current collectors that are adjacent.

### Citation List

### Patent Literature

Patent Literature 1: Japanese Patent No. 5504708

### Summary of Invention

### Technical Problem

In order to increase the sealing performance of such a seal portion of the bipolar secondary battery as described above, it is conceivable to adopt a configuration in which a sealing body is attached to the seal portion constituting the outer side face of a stack including stacked electrodes. For example, in order to attach a sealing body to the periphery of a communication hole (solution feeding port) that is provided to the seal portion and through which the inside of the bipolar secondary battery is in communication with the outside thereof, a metal mold for injection molding or a heat sealer is disposed in a holding region of the periphery of the solution feeding port of the seal portion, and the stack is pressurized in the stack direction. In any of these cases, the sealing body is stably attachable to the outer side face of the stack due to an increased holding region.

An object of the present disclosure provides an electric power storage module that can be stably provided with a sealing body for increasing sealability.

### Solution to Problem

An electric power storage module according to the present disclosure is an electric power storage module comprising: an electrode stack including a plurality of electrodes each including a current collector, the electrodes being stacked along a first direction; a first resin portion provided to the electrode stack such that an internal space is formed between each of the current collectors adjacent in the first direction, the first resin portion sealing the internal space; and a sealing body joined to the first resin portion, wherein an outer surface of the first resin portion includes: a first end face in the first direction; a second end face opposite to the first end face in the first direction; and four outer side faces extending along the first direction such that the first end face and second end face are connected, the sealing body is joined to at least the first end face and the second end face, the first resin portion includes: a plurality of frame-shaped sealing members provided to respective peripheral edge portions of the current collectors; a plurality of frame-shaped spacers forming, together with the sealing members, the internal spaces between the current collectors by being interposed between the sealing members adjacent in the first direction; a welded end portion including the four outer side faces, the welded end portion being formed by welding outer peripheral edges of the sealing members and the spacers opposite to the internal spaces; and a plurality of communication holes communicating the internal spaces and an outside of the first resin portion by being opened on a first outer side face as one of the four outer side faces and the internal spaces, in at least a first portion including a region provided with the openings of the communication holes of the first outer side face in the first resin portion, when viewed in the first direction, inner edge of the sealing member is located inside with respect to outer edge of the current collector, in at least the first portion, when viewed in the first direction, an inner edge of the sealing body coincides with the inner edge of the sealing member or is located outside with respect to the inner edge of the sealing member, and in at least the first portion, when viewed in the first direction, at least part of inner edge of the spacer is located inside with respect to the inner edge of the sealing member.

In this electric power storage module, the first resin portion is provided to the electrode stack including the electrodes stacked along the first direction, and the sealing body is joined to the first end face and the second end face in the first direction of the first resin portion. In the first resin portion, the spacers are each interposed between each of the sealing members provided one-to-one to the respective peripheral edge portions of the current collectors. With this arrangement, the spacers and the sealing members form the internal spaces each between the corresponding current collectors adjacent in the first direction. Further, the first resin portion is provided with the communication holes through which the first outer side face of the four outer side faces of the first resin portion is in communication with the internal spaces. Such a communication hole can be used as, for example, a solution feeding port for feeding an electrolytic solution into the internal spaces. In the first portion including the region provided with the openings of the communication holes of the first outer side face of the first resin portion, when viewed in the first direction, the at least part of the respective inner edges of the spacers are located inside the respective inner edges of the sealing members. Thus, when viewed in the first direction, in the at least part, each spacer interposed between the corresponding sealing members protrudes inward from the respective inner edges of the sealing members. Therefore, for example, a metal mold for injection molding or a heat sealer can be disposed in the part as a holding region as described above, and pressing force and holding force can be applied to provide the sealing body. As a result, the sealing body for increasing sealability can be stably provided.

In the electric power storage module according to the present disclosure, the four outer side faces may include three second outer side faces as outer side faces different from the first outer side face, and in second portion including the three second outer side faces in the first resin portion, when viewed in the first direction, the inner edge of the spacer may be located inside with respect to the inner edge of the sealing member.

In the electric power storage module according to the present disclosure, the sealing body may include an injection-molded resin portion welded to the first end face and the second end face in the first portion.

In the electric power storage module according to the present disclosure, the sealing body may include a laminate sheet including a metal layer and an insulating layer laminated on the metal layer, and the laminate sheet may be welded to the first end face and the second end face.

In the electric power storage module according to the present disclosure, the electrode stack may include a separator interposed between each of the electrodes adjacent in the first direction, and an end portion of the separator may be disposed between sealing member and the spacer in the first direction.

### Advantageous Effects of Invention

According to the present disclosure, provided can be an electric power storage module that can be stably provided with a sealing body for increasing sealability.

### Brief Description of Drawings

FIG. 1 is a schematic plan view of an electric power storage module according to the present embodiment.
FIG. 2 is a schematic cross-sectional view taken along line II-II of FIG. 1.
FIG. 3 is a schematic cross-sectional view taken along line III-III of FIG. 1.
FIG. 4 is a schematic cross-sectional view of part of the electric power storage module in FIG. 3.
FIG. 5 is a schematic side view of part of the electric power storage module in FIG. 1.
FIG. 6 is a schematic side view of part of the electric power storage module in FIG. 1.
FIG. 7 is a schematic cross-sectional view of an exemplary modification of a spacer in FIGS. 2 and 3.
FIG. 8 is a schematic cross-sectional view of an electric power storage module according to a modification.
FIG. 9 is a schematic cross-sectional view of an electric power storage module according to another modification.

### Description of Embodiments

Hereinbelow, an embodiment will be described in detail with reference to the drawings. Note that in the description of the drawings, the same or equivalent elements will be denoted by the same reference signs, and a redundant description will not be given in some cases. It is illustrated as an orthogonal coordinate system defined by a coordinate axis indicating a first direction D1, a coordinate axis indicating a second direction D2, and a coordinate axis indicating a third direction D3.

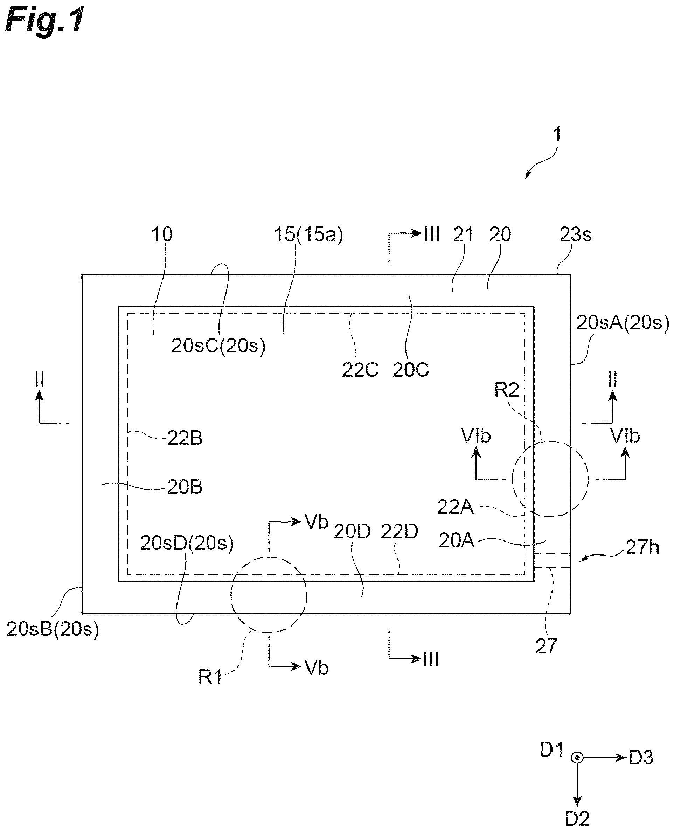

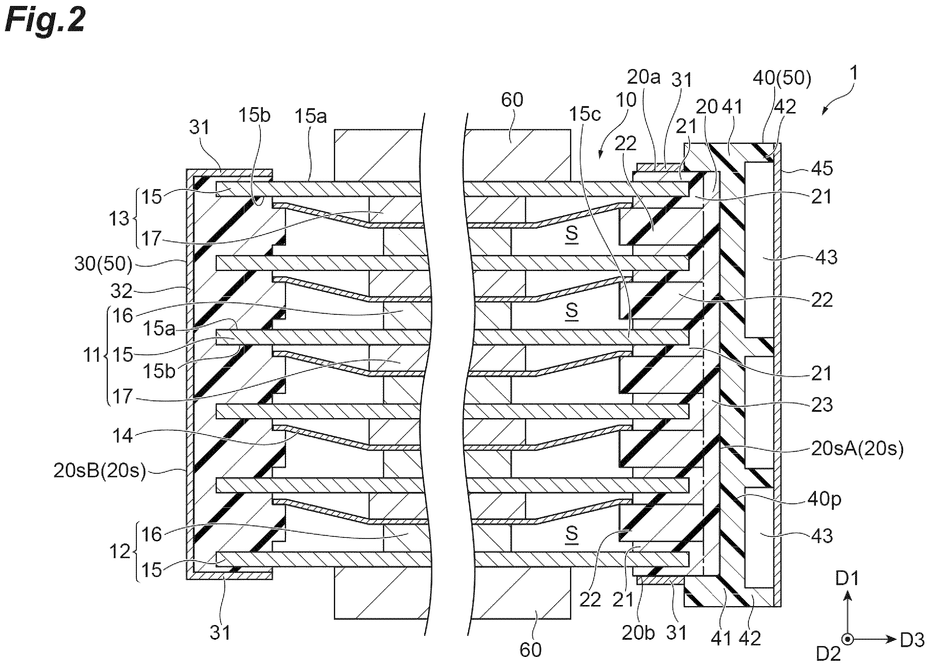

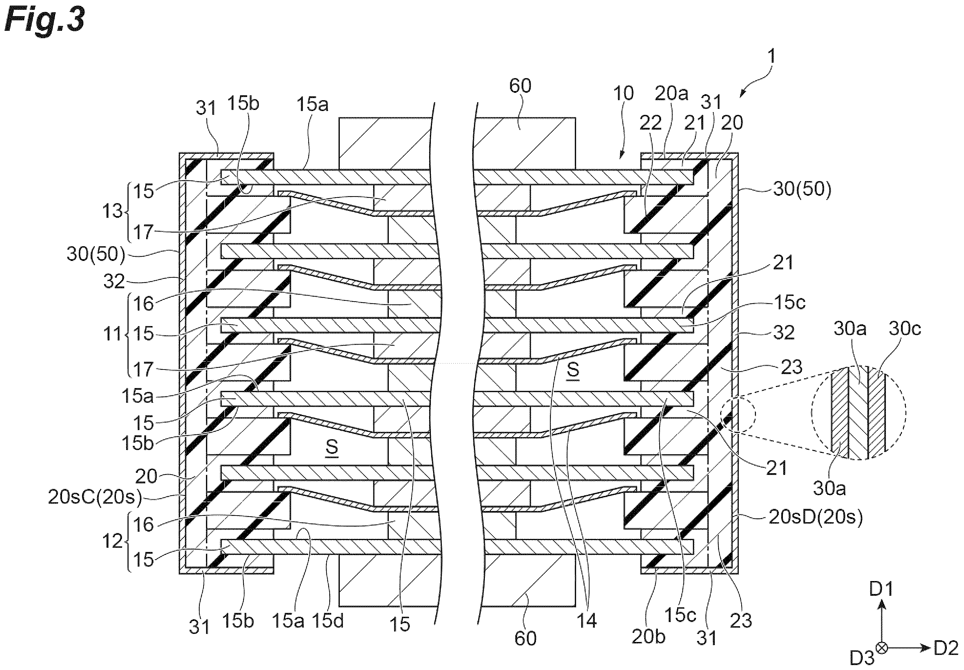

FIG. 1 is a schematic cross-sectional view of an electric power storage module according to the present embodiment. FIG. 2 is a schematic cross-sectional view taken along line II-II of FIG. 1. FIG. 3 is a schematic cross-sectional view taken along line III-III of FIG. 1.

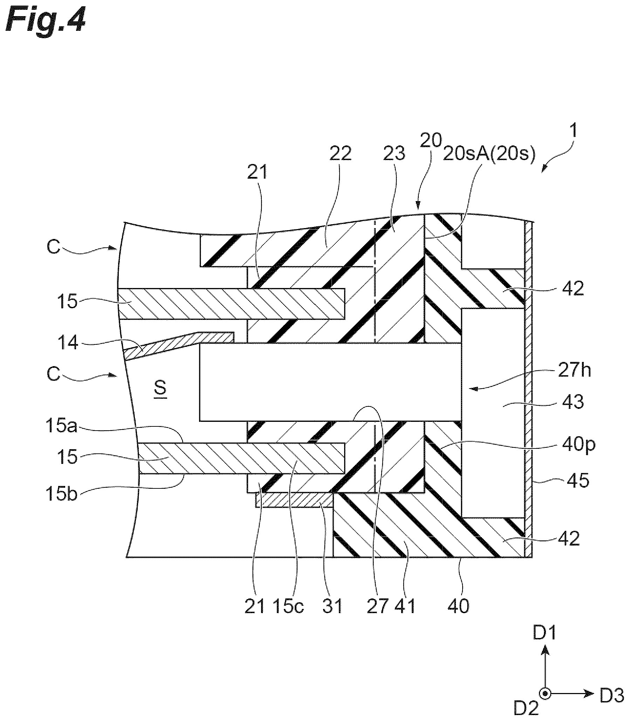

FIG. 4 is a schematic cross-sectional view of part of the electric power storage module in FIG. 3. An electric power storage module 1 in FIGS. 1 to 4 is an electric power storage module to be used for batteries of various vehicles such as forklift vehicles, hybrid vehicles, and electric vehicles. The electric power storage module 1 is, for example, a secondary battery such as a nickel-hydrogen secondary battery or a lithium-ion secondary battery. The electric power storage module 1 may be an electric double-layer capacitor or an all-solid-state battery. Herein, a case of the electric power storage module 1 as a lithium-ion secondary battery is illustrated.

The electric power storage module 1 includes an electrode stack 10, a first resin portion 20, and a sealing body 50. Note that the sealing body 50 is not illustrated in FIG. 1. The electrode stack 10 includes a plurality of electrodes stacked along the first direction D1. The first direction D1 is a direction in which the electrodes are stacked and is a height direction of the electric power storage module 1. The electrodes include a plurality of bipolar electrodes 11, a positive terminal electrode 12, and a negative terminal electrode 13. A separator 14 is interposed between each of the electrodes that are adjacent.

The bipolar electrodes 11 each include a current collector 15, a positive active material layer 16, and a negative active material layer 17. The current collector 15 has, for example, a rectangular sheet shape. The positive active material layer 16 is provided on a first face 15a of the current collector 15. The negative active material layer 17 is provided on a second face 15b of the current collector 15. The bipolar electrodes 11 are stacked such that the positive active material layer 16 of one bipolar electrode 11 is opposite the negative active material layer 17 of another bipolar electrode 11. Herein, the first face 15a of the current collector 15 is a face facing one side in the first direction D1, and the second face 15b of the current collector 15 is a face facing the other side in the first direction D1.

The positive active material layer 16 and the negative active material layer 17 are each rectangular-shaped when viewed in the first direction D1. The negative active material layer 17 has a size larger than that of the positive active material layer 16 when viewed in the first direction D1. That is, in plan view viewed in the first direction D1, the entire region where the positive active material layer 16 is provided is located within the region where the negative active material layer 17 is provided.

The positive terminal electrode 12 includes a current collector 15 and a positive active material layer 16 provided on a first face 15a of the current collector 15. The positive terminal electrode 12 does not include a positive active material layer 16 and a negative active material layer 17 on a second face 15b of the current collector 15. That is, an active material layer is not provided on the second face 15b of the current collector 15 of the positive terminal electrode 12. The positive terminal electrode 12 is stacked on a bipolar electrode 11 at a second end of the electrode stack 10 in the first direction D1. The positive terminal electrode 12 is stacked on the bipolar electrode 11 such that the positive active material layer 16 of the positive terminal electrode 12 is opposite the negative active material layer 17 of the bipolar electrode 11.

The negative terminal electrode 13 includes a current collector 15 and a negative active material layer 17 provided on a second face 15b of the current collector 15. The negative terminal electrode 13 does not include a positive active material layer 16 and a negative active material layer 17 on a first face 15a of the current collector 15. That is, an active material layer is not provided on the first face 15a of the current collector 15 of the negative terminal electrode 13. The negative terminal electrode 13 is stacked on a bipolar electrode 11 at a first end of the electrode stack 10 in the first direction D1. The negative terminal electrode 13 is stacked on the bipolar electrode 11 such that the negative active material layer 17 of the negative terminal electrode 13 is opposite the positive active material layer 16 of the bipolar electrode 11.

The separators 14 are sandwiched between each of the bipolar electrodes 11 that are adjacent, between the positive terminal electrode 12 and the bipolar electrode 11 that are adjacent, and between the negative terminal electrode 13 and the bipolar electrode 11 that are adjacent. Such a separator 14 is interposed between the positive active material layer 16 and the negative active material layer 17. The separator 14 separates the positive active material layer 16 and the negative active material layer 17, and allows charge carriers such as lithium ions to pass while preventing a short circuit due to contact between the adjacent electrodes.

Each of the current collectors 15 is a chemically inactive electric conductor that causes a current to continuously flow through the positive active material layer 16 and the negative active material layer 17 during discharge or charge of a lithium-ion secondary battery. The material of the current collector 15 is, for example, a metal material, a conductive resin material, or a conductive inorganic material. Examples of the conductive resin material include a resin resulting from adding, as necessary, a conductive filler to a conductive polymer material or a nonconductive polymer material. The current collector 15 may include a plurality of layers. In this case, each layer of the current collector 15 may include the above-described metal material or conductive resin material.

A covering layer may be formed on the surface of the current collector 15. The covering layer may be formed by a known method such as plating or spray coating, for example. The current collector 15 may have, for example, a plate shape, a foil shape (e.g., metal foil), a film shape, or a mesh shape. Examples of the metal foil include an aluminum foil, a copper foil, a nickel foil, a titanium foil, and a stainless steel foil. Examples of the stainless steel foil include SUS 304, SUS 316, and SUS 301 defined in JIS G 4305:2015. Use of a stainless steel foil as the current collector 15 secures the mechanical strength of the current collector 15. The current collector 15 may be an alloy foil or a clad foil containing such a metal as described. In a case where the current collector 15 has a foil shape, the thickness of the current collector 15 may be, for example, 1 µm to 100 µm.

The positive active material layer 16 contains a positive active material capable of occluding and releasing charge carriers such as lithium ions. Examples of the positive active material include a lithium composite metal oxide having a layered rocksalt structure, a metal oxide having a spinel structure, and a polyanionic compound. The positive active material may be any material usable for the lithium-ion secondary battery. The positive active material layer 16 may contain a plurality of such positive active materials as described above. In the present embodiment, the positive active material layer 16 contains olivine type lithium iron phosphate (LiFePO₄) as a composite oxide.

The negative active material layer 17 contains a negative active material capable of occluding and releasing charge carriers such as lithium ions. The negative active material may be any of a simple substance, an alloy, or a compound. Examples of the negative active material include Li, carbon, and a metal compound. The negative active material may be an element that can be alloyed with lithium or a compound thereof, for example. Examples of the carbon include natural graphite, artificial graphite, hard carbon (non-graphitizing carbon), and soft carbon (graphitizing carbon). Examples of the artificial graphite include highly oriented graphite and mesocarbon microbeads. Examples of the element that can be alloyed with lithium include silicon and tin. In the present embodiment, the negative active material layer 17 contains graphite as a carbon-based material.

Each of the positive active material layer 16 and the negative active material layer 17 (hereinafter, also simply referred to as an "active material layer" in some cases) may further contain a conductive auxiliary, a binder, an electrolyte (e.g., polymer matrix, ion conductive polymer, or electrolytic solution) for increase electric conductivity and a supporting electrolyte salt (lithium salt) for increasing ion conductivity as necessary. The conductive auxiliary is added to increase the electric conductivity of each of the electrodes (the bipolar electrodes 11, the positive terminal electrode 12, and the negative terminal electrode 13). The conductive auxiliary is, for example, acetylene black, carbon black, or graphite.

Examples of the binder include fluorine-containing resins such as polyvinylidene fluoride, polytetrafluoroethylene, and fluororubber, thermoplastic resins such as polypropylene and polyethylene, imide resins such as polyimide and polyamidimide, alkoxysilyl group-containing resins, acrylic resins such as acrylic acid and methacrylic acid, styrene-butadiene rubber (SBR), carboxymethyl cellulose, alginates such as sodium alginate and ammonium alginate, water-soluble cellulose ester crosslinked bodies, and starch-acrylic acid graft polymers. These binders can be used alone or in combination. For example, water or N-methyl-2-pyrrolidone (NMP) is used as a solvent.

The separator 14 may be, for example, a porous sheet or a nonwoven fabric containing a polymer that absorbs and holds an electrolyte. Examples of a material of the separator 14 include polypropylene, polyethylene, polyolefin, and polyester. The separator 14 may have a single layer structure or a multilayer structure. The multilayer structure may have, for example, a ceramic layer as an adhesive layer or a heat resistant layer. The separator 14 may be impregnated with an electrolyte. The separator 14 may include an electrolyte such as a polymer electrolyte or an inorganic electrolyte. Examples of the electrolyte with which the separator 14 is impregnated include a liquid electrolyte (electrolytic solution) containing a nonaqueous solvent and an electrolyte salt dissolved in the nonaqueous solvent, or a polymer gel electrolyte containing an electrolyte held in a polymer matrix.

In a case where the separator 14 is impregnated with the electrolytic solution, a known lithium salt such as LiClO₄, LiAsF₆, LiPF₆, LiBF₄, LiCF₃SO₃, LiN(FSO₂)₂, or LiN(CF₃SO₂)₂ may be used as the electrolyte salt. In addition, a known solvent such as cyclic carbonates, cyclic esters, chain carbonates, or chain esters may be used as the nonaqueous solvent. Note that, two or more of these known solvent materials may be used in combination.

The first resin portion 20 is frame-shaped on the peripheral edge portion of the electrode stack 10 such that the electrode stack 10 is surrounded. The first resin portion 20 can be joined to each of the first face 15a and the second face 15b of each current collector 15 on the peripheral edge portion 15c of the current collector 15. The first resin portion 20 is provided to form internal spaces S each between the corresponding current collectors 15 adjacent in the first direction D1, and seal each internal space S. An electrolytic solution (not illustrated) is contained in each internal space S. That is, the first resin portion 20 defines the internal spaces S that contain the electrolytic solution, together with the current collectors 15 adjacent in the first direction D1. The first resin portion 20 blocks the outward permeation of the electrolytic solution.

The first resin portion 20 prevents intrusion of, for example, moisture from the outside of the electrode stack 10 into the internal spaces S. For example, in order to prevent air inflow from the outside of the electrode stack 10 into the internal spaces S, a diffusion coefficient or a transmission coefficient is adjusted such that the first resin portion 20 may have a transmission coefficient indicating that air is less likely to transmit through the resin. The separator 14 has an edge portion joined to the first resin portion 20. The first resin portion 20 includes an insulating material. Examples of the material of the first resin portion 20 include various resin materials such as polypropylene, polyethylene, polystyrene, ABS resin, acid-modified polypropylene, acid-modified polyethylene, and acrylonitrile styrene resin.

The first resin portion 20 includes a plurality of sealing members 21, a plurality of spacers 22, and a welded end portion 23. The sealing members 21 are provided one-to-one to the corresponding current collectors 15. Therefore, the sealing members 21 are stacked on top of each other along the first direction D1. The sealing members 21 are each frame-shaped when viewed in the first direction D1 and are provided one-to-one on the respective peripheral edge portions 15c of the current collectors 15. That is, each sealing member 21 is provided to extend from the first face 15a to the second face 15b of the corresponding current collector 15 through its end face, and covers the peripheral edge portion 15c. The sealing member 21 is welded to both of the first face 15a and the second face 15b of the current collector 15. More specifically, a single sealing member 21 is frame-shaped when viewed in the first direction, and includes a pair of base materials provided to sandwich the peripheral edge portion 15c of the corresponding current collector 15. One of the pair of base materials is welded to the first face 15a of the peripheral edge portion 15c of the current collector 15 such that the one ranges from the first face 15a to the end face. The other of the pair of base materials is welded to the second face 15b of the peripheral edge portion 15c of the current collector 15 such that the other ranges from the second face 15b to the end face. The one and the other of the pair of base materials, which range to the end face of the current collector 15, overlap each other at part of the end face of the current collector 15, and partially welded to form the welded end portion 23 as described later.

The spacers 22 are each interposed between each of the sealing members 21 in the first direction D1. With this arrangement, the spacers 22 hold the space between each of the sealing members 21 that are adjacent, namely, between each of the current collectors 15 that are adjacent. The spacers 22 are each frame-shaped when viewed in the first direction D1 and are each disposed above the peripheral edge portion 15c of the corresponding current collector 15. The spacers 22 are each in contact with the corresponding paired sealing members 21 adjacent in the first direction D1.

The welded end portion 23 is formed by the respective ends (outer peripheral edges) of the sealing members 21 and the respective ends (outer peripheral edges) of the spacers 22 that are welded and integrated, and the respective outer peripheral edges of the sealing members 21 and the respective outer peripheral edges of the spacers 22 are opposite the internal spaces S. In other words, the sealing members 21 and the spacers 22 are not welded to a portion other than the welded end portion 23 and are only in contact with each other. The welded end portion 23 is frame-shaped and surrounds the electrode stack 10 when viewed in the first direction D1. The welded end portion 23 has a side face opposite the internal spaces S that extends along the first direction D1, and the side face constitutes as an outer side face 20s of the first resin portion 20. In other words, the first resin portion 20 includes the outer side face 20s opposite the internal spaces S.

The first resin portion 20 is provided with communication holes 27 in communication with each of the internal spaces S (see FIGS. 1 and 4). As an example, each communication hole 27 penetrates the corresponding spacer 22 and the welded end portion 23. The communication hole 27 has an opening on one side opened to the corresponding internal space S, and an opening 27h on the other side opened to the outer side face 20s of the first resin portion 20. In the electric power storage module 1, a cell C including a single internal space S is provided between a pair of current collectors 15 that are adjacent. Herein, a singe communication hole 27 is provided for the single cell C.

Therefore, the outer side face 20s of the first resin portion 20 includes a first outer side face 20sA provided with the respective openings 27h of the communication holes 27 and the other three second outer side faces 20sB, 20sC, and 20sD. The second outer side face 20sB is a face opposite the first outer side face 20sA, and the second outer side face 20sC and the second outer side face 20sD are faces connecting the first outer side face 20sA and the second outer side face 20sB. Further, both ends of the first resin portion 20 in the first direction D1 are each formed with the corresponding sealing member 21. Therefore, the first end face 20a and the second end face 20b of the first resin portion 20 in the first direction D1 are the respective outer surfaces of the pair of sealing members 21 disposed one-to-one on both ends of the first resin portion 20 in the first direction D1.

As described above, the outer surface of the first resin portion 20 includes the first end face 20a in the first direction D1, the second end face 20b opposite the first end face 20a in the first direction D1, and the four outer side faces 20s extending along the first direction D1 such that the first end face 20a and the second end face 20b are connected. The four outer side faces 20s are constitute the outer face of the welded end portion 23. The first outer side face 20sA as one of the four outer side faces 20s is provided with the openings 27h of the communication holes 27. The three second outer side faces 20sB, 20sC, and 20sD different from the first outer side face 20sA of the four outer side faces 20s are not provided with an opening 27h of such a communication hole 27 as described above.

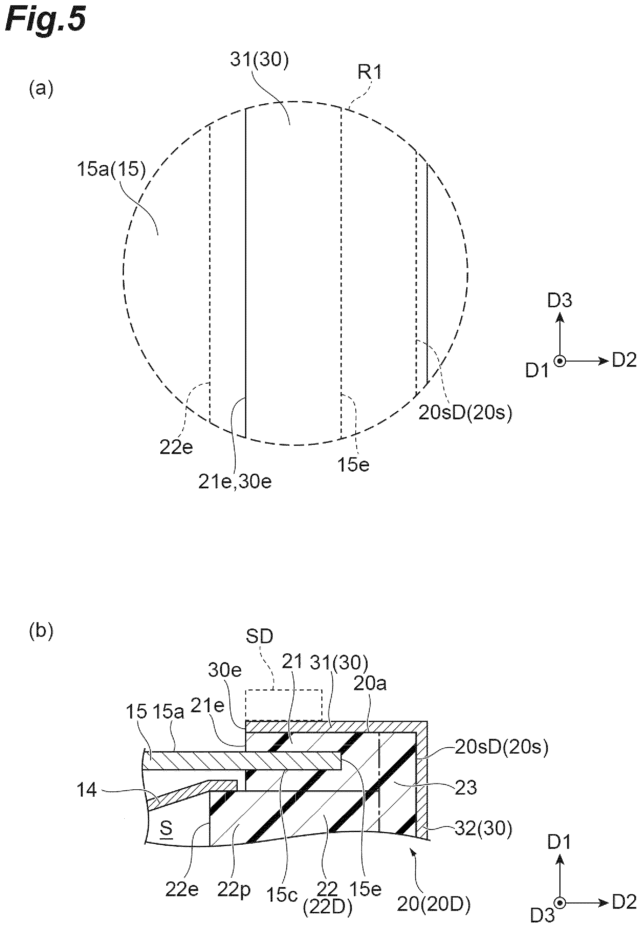

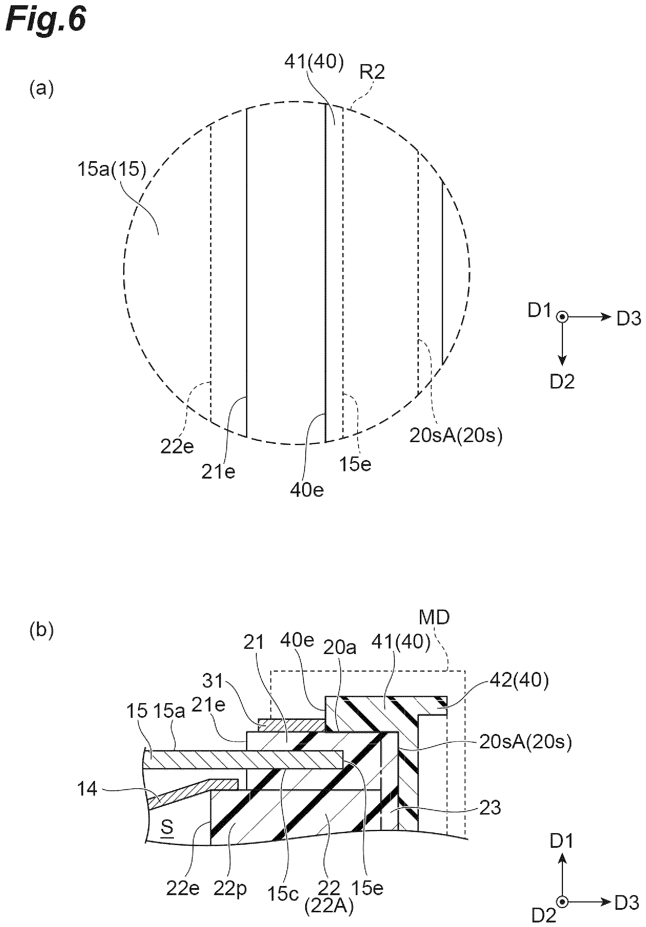

Here, FIGS. 5 and 6 are schematic views of part of the electric power storage module in FIG. 1. FIG. 5(a) is an enlarged plan view of a region R1 in FIG. 1, and FIG. 5(b) is an enlarged cross-sectional view taken along line Vb-Vb in FIG. 1. FIG. 6(a) is an enlarged plan view of a region R2 in FIG. 1, and FIG. 6(b) is an enlarged cross-sectional view taken along line VIb-VIb in FIG. 1. The sealing body 50 illustrated in FIGS. 2, 3, 5, and 6 has a rectangular frame shape when viewed in the first direction D1, and is provided on the first end face 20a, the second end face 20b, and the outer side faces 20s of the first resin portion 20. The sealing body 50 is joined (welded) to each of the first end face 20a and the second end face 20b and joined (welded) to the outer side faces 20s. The sealing body 50 includes a laminate sheet 30 and a second resin portion (injection-molded resin portion) 40. However, the sealing body 50 does not necessarily have a frame shape.

The laminate sheet 30 has a rectangular frame shape when viewed in the first direction D1, and is provided on the second outer side faces 20sB, 20sC, and 20sD of the outer side faces 20s of the first resin portion 20, the first end face 20a, and the second end face 20b. The laminate sheet 30 includes a metal layer 30a, a first insulating layer 30b stacked on the metal layer 30a, and a second insulating layer 30c that is stacked on the metal layer 30a and is opposite the first insulating layer 30b across the metal layer 30a. The laminate sheet 30 is welded to the first resin portion 20 on the first insulating layer 30b.

The first insulating layer 30b is made of an insulating resin. The material of the first insulating layer 30b is, for example, polypropylene, polyethylene, polyolefin, or polyamide. The material of the first insulating layer 30b is selectable from the same kind of material as the first resin portion 20 from the viewpoint of adhesiveness with the first resin portion 20. The metal layer 30a is made of a material having low moisture permeability (small moisture permeability coefficient) such as aluminum foil or stainless foil. The second insulating layer 30c is made of, for example, an insulating resin. The material of the second insulating layer 30c is, for example, polypropylene or nylon. As an example, the laminate sheet 30 is an aluminum laminate sheet, and polypropylene can be selected as the first insulating layer 30b, aluminum can be selected as the metal layer 30a, and polyethylene terephthalate can be selected as the second insulating layer 30c.

The laminate sheet 30 is welded to at least the first end face 20a and the second end face 20b, and here, is also welded to the second outer side faces 20sB, 20sC, and 20sD. The laminate sheet 30 includes a pair of end face portions 31 disposed one-to-one on the first end face 20a and the second end face 20b, and a side face portion 32 disposed on the second outer side faces 20sB, 20sC, and 20sD.

In such a manner, the laminate sheet 30 covers at least part of the first end face 20a and the second end face 20b of the first resin portion 20 in the first direction D1 and substantially the entire second outer side faces 20sB, 20sC, and 20sD, thereby contributing to prevention of moisture permeation and gas permeation (and improvement of pressure resistance) between the internal spaces S and the outside of the electric power storage module 1, namely, increasing sealability, in the first direction D1, the second direction D2, and the third direction D3 that are intersecting the first direction D1.

The second resin portion 40 has a rectangular frame shape when viewed in the third direction D3 intersecting the first direction D1, and is provided on the first outer side face 20sA of the outer side faces 20s of the first resin portion 20, the first end face 20a, and the second end face 20b. The second resin portion 40 is welded to at least the first end face 20a and the second end face 20b, and here, is also welded to the first outer side face 20sA. More specifically, the second resin portion 40 may be provided on the first end face 20a, the second end face 20b, and the first outer side face 20sA by injection molding.

The second resin portion 40 includes a reinforcing portion 41 and a frame portion 42. As will be described later, on the first outer side face 20sA provided with the openings 27h of the communication holes 27, the frame portion 42 having a rectangular frame shape is provided such that the openings 27h are surrounded when viewed in the third direction D3. The frame portion 42 protrudes in the third direction D3 from a base portion 40p on the first outer side face 20sA of the second resin portion 40. The base portion 40p is a plate-like portion welded to the first outer side face 20sA. With this arrangement, on the first outer side face 20sA, the welded end portion 23 and the base portion 40p are stacked along the third direction D3.

The reinforcing portion 41 is provided on each of the first end face 20a and the second end face 20b. More specifically, the reinforcing portion 41 is provided from the sealing members 21 to the welded end portion 23. The reinforcing portion 41 is provided on the first end face 20a and the second end face 20b, whereby a thickness of a resin portion in the first direction D1, namely, a distance from the internal spaces S to the outside of the electric power storage module 1 in the first direction D1 is increased, so that this arrangement contributes to prevention of moisture permeation and prevention of gas permeation (and improvement of pressure resistance) along the first direction D1 between the internal spaces S and the outside, namely, increasing sealability.

Note that in the third direction D3 intersecting the first direction D1, the base portion 40p as a resin portion corresponding to the reinforcing portion 41 is provided to the first outer side face 20sA of the first resin portion 20. The thickness of the resin portion (the sealing members 21 or the spacers 22 and the welded end portion 23) excluding the second resin portion 40 in the third direction D3, namely, the distance from the internal spaces S to the outside of the electric power storage module 1 in the third direction D3 excluding the second resin portion 40 is larger than that in the first direction D1, so that moisture permeation and gas permeation are less likely to occur as compared with those in the first direction D1. Furthermore, the base portion 40p is provided and a sealing film 45 to be described later is provided to the frame portion 42, whereby moisture permeation and gas permeation in the third direction D3 are further prevented.

As described above, when viewed in the third direction D3 intersecting the first outer side face 20sA, the frame portion 42 is provided to the first outer side face 20sA (through the base portion 40p) such that the frame portion 42 has a rectangular frame shape surrounding the respective openings 27h of the communication holes 27. The base portion 40p is provided with each hole at the position corresponding to the communication hole 27, so that the opening 27h of the communication hole 27 is in communication with a region 43 surrounded by the frame portion 42. As an example, the frame portion 42 is used for feeding an electrolytic solution into each of the internal spaces S.

More specifically, in feeding of the electrolytic solution, with the nozzle of the electrolytic solution feeder in close contact with the top face of the frame portion 42, the electrolytic solution is introduced into each region 43 through the nozzle. In such a manner, the electrolytic solution can be fed into the internal spaces S from each communication hole 27 in communication with the corresponding region 43 through the opening 27h. The sealing film 45 is attached to the frame portion 42. The sealing film 45 may have a layer structure and a material similar to those of the laminate sheet 30, for example. Accordingly, the communication holes 27 and the internal spaces S are sealed. As described above, the second resin portion 40 can have a function of feeding of an electrolytic solution and a function of sealing the internal spaces S in addition to a function as the sealing body 50. That is, the second resin portion 40 is also a solution feeding frame here.

Subsequently, the positional relationship between the respective parts of the electric power storage module 1 will be described. First, as illustrated in FIG. 1, the first resin portion 20 has a rectangular annular shape when viewed in the first direction D1, and includes portions corresponding one-to-one to four sides of the rectangle. One of the portions corresponding to the four sides is a first portion 20A including a region provided with the openings 27h of the communication holes 27 of the first outer side face 20sA. The portions corresponding to the other three sides of the portions corresponding to the four sides are a second portion 20B including the second outer side face 20sB, a second portion 20C including the second outer side face 20sC, and a second portion 20D including a second outer side face 20sD.

Note that, here, among the four outer side faces 20s of the first resin portion 20, one provided with the openings 27h of the communication holes 27 is referred to as a "first outer side face", and the others are each referred to as a "second outer side face". In addition, in the portions of the first resin portion 20, a portion including the periphery of the openings 27h of the communication holes 27 of the "first outer side face" when viewed in the first direction D1 is referred to as a "first portion", and the other portions are each referred to as a "second portion".

Similarly, the spacers 22 each have a rectangular annular shape when viewed in the first direction D1, and each include four first side portions 22A to 22D corresponding one-to-one to the four sides of the rectangle. When viewed in the first direction D1, the first side portion 22A is a portion included in the first portion 20A of the first resin portion 20, the first side portion 22B is a portion included in the second portion 20B of the first resin portion 20, the first side portion 22C is a portion included in the second portion 20C of the first resin portion 20, and the first side portion 22D is a portion included in the second portion 20D of the first resin portion 20.

FIG. 5 illustrates a part including the second portion 20D of the first resin portion 20 of the electric power storage module 1. Referring to FIG. 5, the positional relationship between the current collector 15, the sealing member 21, the spacer 22 (i.e., the first side portion 22D), and the laminate sheet 30 will be described. As illustrated in FIG. 5, when viewed in the first direction D1, an inner edge 21e of the sealing member 21 is located inside an outer edge 15e of the current collector 15 (i.e., on the internal space S side). In addition, when viewed in the first direction D1, an inner edge 30e (of the end face portion 31) of the laminate sheet 30 is located inside the outer edge 15e of the current collector 15 and substantially coincides with the inner edge 21e of the sealing member 21.

Further, when viewed in the first direction D1, an inner edge 22e (the first side portion 22D) of the spacer 22 is located inside the inner edge 21e of the sealing member 21. With this arrangement, the spacer 22 includes a protrusion 22p protruding inward from the inner edge 21e of the sealing member 21 when viewed in the first direction D1. That is, when viewed in the first direction D1, the entire region provided with the sealing member 21 is a region (holding region) where the sealing member 21 and the spacer 22 overlap each other.

Therefore, in welding of the laminate sheet 30 to the sealing member 21, the entirety of the sealing member 21 (the entirety of the first end face 20a and the entirety of the second end face 20b) can be pressed in the first direction D1 by a sealer SD, and a welding margin of the laminate sheet 30 is secured. Note that an end of the separator 14 overlaps the protrusion 20p and is welded to the spacer 22.

Although not illustrated in FIG. 5, the portions corresponding one-to-one to the second portions 20B and 20C of the first resin portion 20 of the electric power storage module 1 also each have a similar positional relationship.

FIG. 6 illustrates a part including the first portion 20A of first resin portion 20 of the electric power storage module 1. Referring to FIG. 6, the positional relationship between the current collector 15, the sealing member 21, the spacer 22 (i.e., the first side portion 22A), and the second resin portion 40 will be similarly described. As illustrated in FIG. 6, also here, when viewed in the first direction D1, the inner edge 21e of the sealing member 21 is located inside the outer edge 15e of the current collector 15 (i.e., on the internal space S side). In addition, when viewed in the first direction D1, an inner edge 40e of the second resin portion 40 (the reinforcing portion 41) is located inside the outer edge 15e of the current collector 15 and located outside the inner edge 21e of the sealing member 21.

Further, when viewed in the first direction D1, the inner edge 22e of the spacer 22 (the first side portion 22A) is located inside the inner edge 21e of the sealing member 21. With this arrangement, the spacer 22 includes the protrusion 22p protruding inward from the inner edge 21e of the sealing member 21 when viewed in the first direction D1. The end of the separator 14 overlaps the protrusion 20p and is welded to the spacer 22. That is, when viewed in the first direction D1, the entirety of the region provided with the sealing member 21 is the region where the sealing member 21 and the spacer 22 overlap each other.

Therefore, in forming of the second resin portion 40 on the first resin portion 20 by injection molding, the edge portion of the metal mold MD can be disposed directly above (directly under) the inner edge 21e of the sealing member 21 and held along the first direction D1, whereby a region for forming the second resin portion 40 (reinforcing portion 41) can be secured. Note that here, the end of the separator 14 overlaps the protrusion 20p and is welded to the spacer 22.

In order to form a second resin portion 40 by injection molding, first, the metal mold MD is attached to a stack including an electrode stack 10 and a first resin portion 20. Then, resin is injected into the molding space of the metal mold MD attached to the stack to mold the second resin portion 40. As an example, in attachment of the metal mold MD, when viewed in the first direction D1, a region (holding region) where a plurality of current collectors 15, a plurality of sealing members 21, and a plurality of spacers 22 overlap can be sandwiched (held) by the metal mold MD. In this case, a space where no spacers 22 are present in the stack direction is not formed in the holding region. Therefore, stably sandwiching can be made by the metal mold MD (the second resin portion 40 can be stably formed). Note that in order to provide an end face portion 31 of a laminate sheet 30 to a first end face 20a and a second end face 20b on which the second resin portion 40 (reinforcing portion 41) is to be formed, the end face portion 31 may be provided before the second resin portion 40 is formed by injection molding, or the end face portion 31 may be provided after the second resin portion 40 is formed by injection molding.

As described above, in the electric power storage module 1, in all of the first side portions 22A to 22D of each spacer 22, the inner edge 22e of the spacer 22 is located inside the inner edge 21e of the corresponding sealing member 21, and the spacer 22 includes the protrusion 22p. In addition, in the electric power storage module 1, the second resin portion 40 is provided only on the first portion 20A among the first portion 20A and the second portions 20B to 20D of the first resin portion 20. Further, in the electric power storage module 1, the laminate sheet 30 is provided on the second portions 20B to 20D among the first portion 20A and the second portions 20B to 20D of the first resin portion 20. Note that in the present embodiment, also in the first portion 20A, the end face portion 31 of the laminate sheet 30 is provided on the first end face 20a and the second end face 20b. In the first portion 20A, the end face portion 31 may be disposed and joined to at least a portion of the first end face 20a and the second end face 20b exposed from the reinforcing portion 41 of the second resin portion 40. In other words, the end face portion 31 may be provided on the first end face 20a and/or the second end face 20b prior to the injection molding of the second resin portion 40, so that at least part of the end face portion 31 may be further disposed between the first end face 20a and/or the second end face 20b and the reinforcing portion 41.

Note that conductive members 60 each functioning as a terminal for extracting current from the electric power storage module 1 are disposed one-to-one on and electrically connected one-to-one to a portion of the first face 15a of the current collector 15 of the positive terminal electrode 12 exposed from the first resin portion 20 and a portion of the second face 15b of the current collector 15 of the negative terminal electrode 13 exposed from the first resin portion 20. Such a conductive member 60 as described above can be used to electrically connect a plurality of electric power storage modules 1. In addition, the conductive member 60 can also be used as a restraining member in order to apply a restraining load to the electrode stack 10. Further, a cooling flow path may be provided in the conductive member 60. The electrode stack 10 can be cooled by circulating a cooling medium through the cooling flow path provided in the conductive member 60.

Meanwhile, in order to form an internal space between current collectors that are adjacent, in some cases, a spacer is interposed between seal portions attached one to-one-to current collectors that are adjacent and opposite to each other in the stack direction. In this case, from the viewpoint of securing the capacity of the internal space, it is conceivable to adopt a configuration in which the inner edge of the spacer is located outside the respective inner edges of the seal portions (i.e., the portion of the spacer is recessed.).

However, for various purposes such as prevention of moisture permeation between the internal space and the outside, prevention of gas permeation between the internal space and the outside, or improvement of pressure resistance, a sealing body is provided outside the seal portions in some cases. In this case, it is conceivable to increase the sealability by disposing a sheet-shaped sealing body on the seal portions, applying pressure in the stack direction to the seal portions while applying heat to the sealing body with a sealer to weld the sealing body to the seal portions, or by disposing a metal mold so as to hold the seal portions along the stack direction and forming a sealing body by injection molding with the metal mold.

In any of these cases, it may be difficult to apply pressing force and holding force to a region where the spacer is not interposed between the seal portions (a region inside the inner edge of the spacer) in the region provided with the seal portions, and thus it may be difficult to provide a sealing body. In such a situation, it is desirable to widen a region where the sealing body is provided as much as possible with respect to the entire region provided with a sealing member, and to provide the sealing body more stably.

In the electric power storage module 1 according to the present embodiment, the first resin portion 20 is provided to the electrode stack 10 including the electrodes (bipolar electrodes 11, positive terminal electrode 12, and negative terminal electrode 13) stacked along the first direction D1, and the sealing body 50 is joined to the first end face 20a and the second end face 20b of the first resin portion 20 in the first direction D1. On the first resin portion 20, each spacer 22 is interposed between the corresponding sealing members 21 each provided on the peripheral edge portion 15c of the corresponding current collector 15 of each electrode. With this arrangement, the internal spaces S are each formed by the corresponding sealing members 21 and the corresponding spacer 22 between the current collectors 15 adjacent along the first direction D1. Further, the first resin portion 20 is provided with the communication holes 27 through which the first outer side face 20sA of the four outer side faces 20s of the first resin portion 20 is in communication with the internal spaces S. Each communication hole 27 can be used as, for example, a solution feeding port for feeding an electrolytic solution into the internal spaces S.

In the first portion 20A of the first resin portion 20 including the region provided with the openings 27h of the communication holes 27 of the first outer side face 20sA, the at least part (here, all) of the respective inner edges 22e of the spacers 22 are located inside the respective inner edges 21e of the sealing members 21 when viewed in the first direction. Thus, when viewed in the first direction D1, in the at least part, each spacer 22 interposed between the corresponding sealing members 21 protrudes inward from the respective inner edges 21e of the sealing members 21. Therefore, for example, the metal mold MD for injection molding or the heat sealer can be disposed in the part as the holding region as described above, and pressing force and holding force can be applied to provide the sealing body 50. As a result, the sealing body 50 for increasing sealability can be stably provided.

In addition, in the electric power storage module 1, the sealing body 50 includes the second resin portion 40 welded to the first end face 20a and the second end face 20b in the first portion 20A. Therefore, in the portion where the respective inner edges 22e of the spacers 22 are located inside the respective inner edges 21e of the sealing members 21 as a holding region, the metal mold MD for injection molding can be provided as described above, whereby the second resin portion 40 as an injection-molded resin portion can be stably provided.

In addition, in the electric power storage module 1, the sealing body 50 includes the laminate sheet 30 including the metal layer 30a and the first insulating layer 30b stacked on the metal layer 30a, and the laminate sheet 30 is welded to the first end face 20a and the second end face 20b of the first resin portion 20 on the first insulating layer 30b. Therefore, the laminate sheet 30 suitably prevents moisture permeation and gas permeation in the internal spaces S and improves strength.

Further, in the electric power storage module 1, the electrode stack 10 includes the separators 14 each interposed between each of the electrodes adjacent in the first direction D1, and the spacers 22 each include the protrusion 22p protruding inward from the inner edge 21e of the corresponding sealing member 21 when viewed in the first direction D1. The end of each separator 14 overlaps and is welded to the corresponding protrusion 22p. Therefore, if the melting point of such a spacer 22 as described above is made relatively high, a short circuit between the corresponding current collectors 15 does not occur as long as the melting point of the spacer 22 is not exceeded, and the heat resistance is improved.

Note that, in the electric power storage module according to the present disclosure, the four outer side faces may include the three second outer side faces as the outer side faces different from the first outer side face, and in the second portions including one-to-one the three second outer side faces in the first resin portion, the respective inner edges of the spacers may be located inside the respective inner edges of the sealing members when viewed in the first direction. In this case, in the second portions including one-to-one the second outer side faces different from the first outer face provided with the openings of the communication holes in the first resin portion, the respective inner edges of the spacers are located inside the respective inner edges of the sealing members, so that pressing force and holding force can be applied to provide the sealing body.

In the electric power storage module according to the present disclosure, the sealing body may include the injection-molded resin portion welded to the first end face and the second end face in the first portion. In this case, the first portion including the portion where the respective inner edges of the spacers are located inside the respective inner edges of the sealing members is the holding region. The metal mold for injection molding is disposed in the holding region as described above, whereby the sealing body including the injection-molded resin portion can be stably provided.

In the electric power storage module according to the present disclosure, the sealing body may include the laminate sheet including the metal layer and the insulating layer stacked on the metal layer, and the laminate sheet may be welded to the first end face and the second end face. In this case, the laminate sheet including the metal layer suitably prevents moisture permeation and gas permeation in the internal spaces and improves strength.

In the electric power storage module according to the present disclosure, the electrode stack may include the separators each interposed between each of the electrodes adjacent in the first direction, and the end may be disposed between one of the sealing members and the spacer in the first direction. In this case, if the melting point of such a spacer as described above is made relatively high, a short circuit between the corresponding current collectors does not occur as long as the melting point of the spacer is not exceeded, and the heat resistance is improved.

The above embodiments each describe one aspect of the electric power storage module according to the present disclosure. Therefore, the electric power storage module according to the present disclosure may result in modification of the electric power storage module 1 described above in any manner.

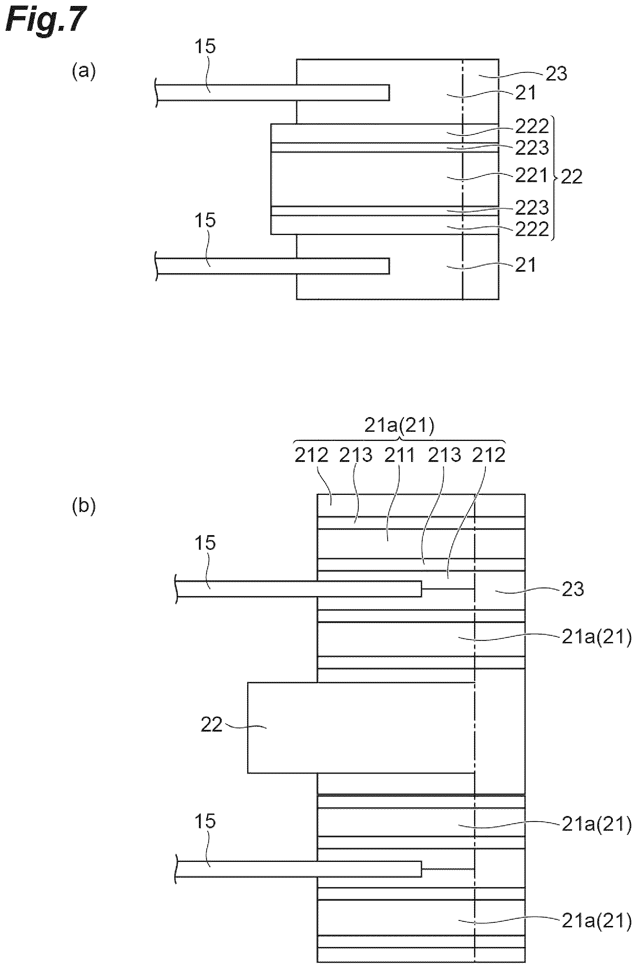

For example, a spacer 22 may have a multilayer structure as illustrated in FIG. 7(a). As an example, the spacer 22 may include an intermediate layer 221, a pair of outermost layers 222 stacked one-to-one on both sides of the intermediate layer 221, and a pair of adhesive layers 223 interposed between the intermediate layer 221 and each of the outermost layers 222. The intermediate layer 221 may be made of a material (e.g., PP) excellent in heat resistance and gas permeability, and the outermost layers 222 may be each made of a material (e.g., a mixed material of PE and PP) excellent in compatibility with a material (e.g., low density PE) of a sealing member 21. Further, each adhesive layer 223 is a layer bonding the intermediate layer 221 and the corresponding outermost layer 222, and is provided as necessary (i.e., it can be omitted.).

Similarly, as illustrated in FIG. 7(b), a sealing member 21 may have a multilayer structure. In the example of FIG. 7(b), each of a pair of base materials 21a constituting a single sealing member 21 has a multilayer structure. In this example, each of the base materials 21a includes an intermediate layer 211, a pair of outermost layers 212 stacked one-to-one on both sides of the intermediate layer 211, and a pair of adhesive layers 213 interposed between the intermediate layer 211 and each of the outermost layers 212. The intermediate layer 211, the outermost layers 212, and the adhesive layers 213 can be made of materials similar to those of the intermediate layer 221, the outermost layers 222, and the adhesive layers 223 illustrated in FIG. 7(a). Note that in FIG. 7, hatching of each part is not given.

Further, in an electric power storage module 1, because the end of the metal layer 30a may be exposed at an end (inner edge 30e) of the laminate sheet 30, an insulator (not illustrated) may be provided so as to cover the end of the laminate sheet 30. In this case, as an example of the insulator, provided can be an insulating film stuck from the first face 15a and/or the second face 15b of a current collector 15 to the end of the laminate sheet 30. In this case, insulation of the laminate sheet 30 is achieved. As a result, a short circuit between a positive terminal electrode 12 and a negative terminal electrode 13 of an electrode stack 10 through the metal layer 30a of the laminate sheet 30 is prevented.

In addition, in the above embodiment, the example has been described in which the entirety of the respective inner edges 22e of the spacers 22 is located inside the respective inner edges 21e of the sealing members 21 when viewed in the first direction D1. However, in the electric power storage module 1, at least part (e.g., at least a single side portion) of the inner edge 22e of each spacer 22 may be located inside the inner edge 21e of the corresponding sealing member 21.

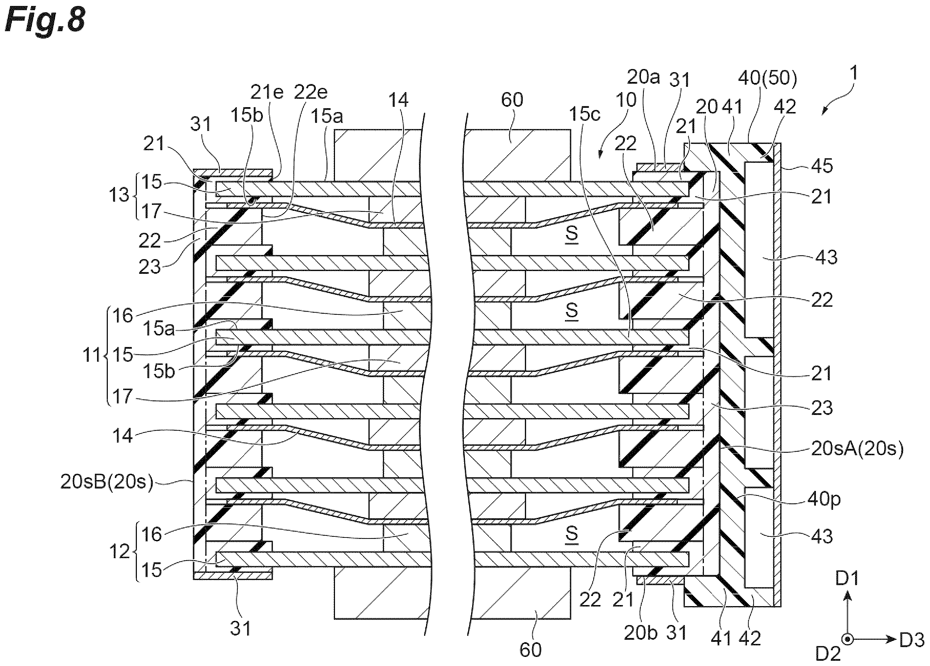

That is, as illustrated in FIG. 8, in an electric power storage module 1, in a second portion 20B including a second outer side face 20sB of a first resin portion 20, the respective inner edges 22e of the spacers 22 may be located outside the respective inner edges 21e of the sealing members 21 when viewed in the first direction D1. That is, in the electric power storage module 1, in at least a first portion 20A including a region provided with respective openings 27h of communication holes 27 of a first outer side face 20sA in the first resin portion 20, at least part of the respective inner edges 22e of the spacers 22 may be located inside the respective inner edges 21e of the sealing members 21 when viewed in the first direction D1.

Therefore, also in second portions 20C and 20D including one-to-one the other second outer side faces 20sC and 20sD in the first resin portion 20, the respective inner edges 22e of the spacers 22 may be similarly located outside the respective inner edges 21e of the sealing members 21. In this case, in the second portions 20B, 20C, and 20D including one-to-one the second outer side faces 20sB, 20sC, and 20sD different from the first outer side face 20sA provided with the openings 27h of the communication holes 27 in the first resin portion 20, the respective inner edges 22e of the spacers 22 are located outside the respective inner edges 21e of the sealing members 21, so that a large volume of each internal space S can be secured.

In other words, in the example of FIG. 8, in the electric power storage module 1, when viewed in the first direction D1, among a plurality of side portions of each spacer 22, respective inner edges 22e of second side portions (first side portions 22B to 22D) different from a first side portion 22A may be located outside the inner edge 21e of the corresponding sealing member 21. In this case, a large volume of each internal space S in the first side portions 22B to 22D can be secured while stably providing a sealing body 50 on the first side portion 22A. Note that here, among the side portions of each spacer 22, a side portion which inner edge is located inside the inner edge 21e of the corresponding sealing member 21 is referred to as a "first side portion", and the other side portions are each referred to as a "second side portion".

Note that in this case, an end face portion 31 of a laminate sheet 30 can be pressed by a sealer SD and welded to the first resin portion 20 provided to respective peripheral edge portions 15c of current collectors 15 in advance, before electrodes are stacked to form an electrode stack 10. In this case, although the end face portion 31 is provided before a second resin portion 40 is formed by injection molding, the end face portion 31 may be provided after the second resin portion 40 is formed by injection molding.

In addition, as illustrated in FIG. 8, in the electric power storage module 1, each separator 14 may extend to the space between one of the corresponding sealing members 21 and the corresponding spacer 22. In this case, a peripheral edge portion of the separator 14 is sandwiched between the one of the sealing members 21 and the spacer 22 and welded to the first resin portion 20.

Further, a portion corresponding to the first outer side face 20sA of the first resin portion 20 may include a first portion including a region provided with respective openings 27h of communication holes 27 in the first outer side face 20sA and second portions different from the first portion, and in the second portion, the respective inner edges 22e of the spacers 22 may be located outside the respective inner edges 21e of the sealing members 21. In this case, because the respective inner edges 22e of the spacers 22 are located inside the respective inner edges 21e of the sealing members 21 only in the minimum necessary range, so that large internal spaces S can be secured.

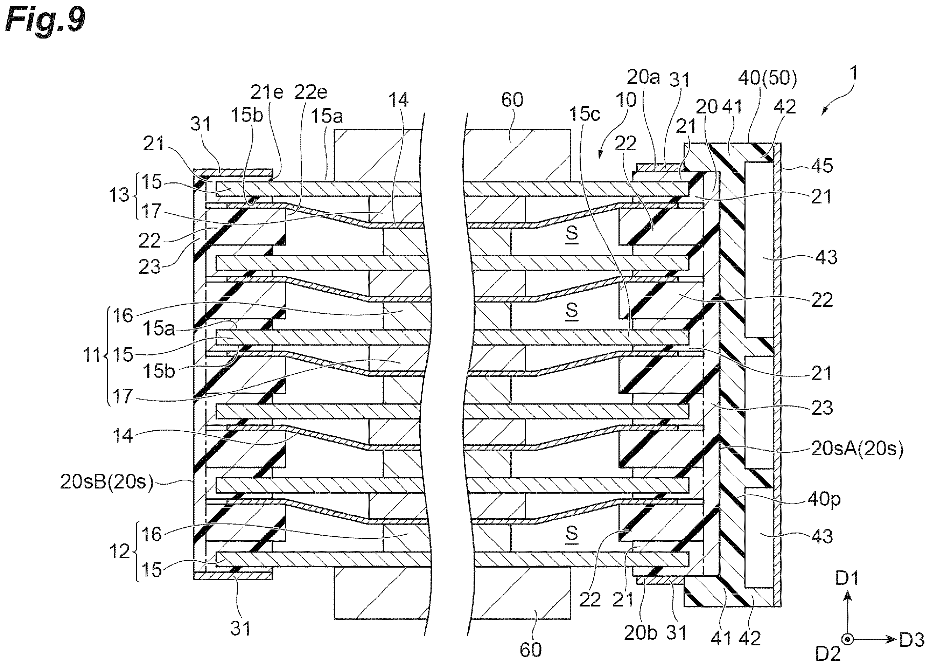

FIG. 9 is a schematic cross-sectional view of an electric power storage module according to another modification. In the example of FIG. 9, similarly to the example in FIG. 8, each separator 14 extends to the space between one of the corresponding sealing members 21 and the corresponding spacer 22. Accordingly, an end of each separator 14 is disposed between one of the corresponding sealing members 21 and the corresponding spacer 22 in the first direction D1. Also in this example, a peripheral edge portion of each separator 14 is sandwiched between one of the corresponding sealing members 21 and the corresponding spacer 22 and welded to a first resin portion 20.

In addition, as illustrated in FIG. 9, in an electric power storage module 1, a portion corresponding to a first outer side face 20sA of the first resin portion 20 may include a first portion 20A including a region provided with respective openings 27h of communication holes 27 in the first outer side face 20sA and the other second portions 20B to 20D, and in all of the second portions 20B to 20D (all the sides of the first resin portion 20), respective inner edges 22e of spacers 22 may be located inside respective inner edges 21e of the sealing members 21. In this case, pressing force and holding force can be applied to provide a sealing body 50.

Here, in the above embodiments, the case where the sealing body 50 has a rectangular annular shape when viewed in the first direction D1 has been described, but the sealing body 50 does not necessarily have an annular shape when viewed in the first direction D1. In this case, the sealing body 50 may be provided to at least one of the portions (the first portion 20A and the second portions 20B to 20D) corresponding one-to-one to the four sides of the first resin portion 20. Alternatively, the sealing body 50 may be provided only to part of a portion corresponding to one side of the first resin portion 20.

In addition, in the above embodiments, the laminate sheet 30 including the metal layer 30a has been exemplified. However, the laminate sheet 30 may include a resin layer instead of the metal layer 30a. The material of the resin layer may be polypropylene, polyethylene, polyamide, polyimide, polyvinyl alcohol, or an ethylene vinyl alcohol copolymer, for example.

### Reference Signs List

- 1: Electric power storage module

- 10: Electrode stack
- 15: Current collector
- 15e: Outer edge
- 20: First resin portion
- 20A: First portion
- 20B, 20C, 20D: Second portion
- 20a: First end face
- 20b: Second end face
- 20s: Outer side face
- 20sA: First outer side face
- 20sB, 20sC, 20sD: Second outer side face
- 21: Sealing member
- 22 21e, 22e, 30e, 40e: Inner edge Spacer
- 22p: Protrusion
- 22A: First side portion
- 22B, 22C, 22D: First side portion
- 27: Communication hole
- 27h: Opening
- 30: Laminate sheet
- 30a: Metal layer
- 30b: First insulating layer (Insulating layer)
- 40: Second resin portion (Injection-molded resin portion)
- S: Internal space

## Claims

1. An electric power storage module comprising:
an electrode stack including a plurality of electrodes each including a current collector, the electrodes being stacked along a first direction;
a first resin portion provided to the electrode stack such that an internal space is formed between each of the current collectors adjacent in the first direction, the first resin portion sealing the internal space; and
a sealing body joined to the first resin portion, wherein
an outer surface of the first resin portion includes:
a first end face in the first direction;
a second end face opposite to the first end face in the first direction; and
four outer side faces extending along the first direction such that the first end face and second end face are connected,
the sealing body is joined to at least the first end face and the second end face,
the first resin portion includes:
a plurality of frame-shaped sealing members provided to respective peripheral edge portions of the current collectors;
a plurality of frame-shaped spacers forming, together with the sealing members, the internal spaces between the current collectors by being interposed between the sealing members adjacent in the first direction;
a welded end portion including the four outer side faces, the welded end portion being formed by welding outer peripheral edges of the sealing members and the spacers opposite to the internal spaces; and
a plurality of communication holes communicating the internal spaces and an outside of the first resin portion by being opened on a first outer side face as one of the four outer side faces and the internal spaces,
in at least a first portion including a region provided with the openings of the communication holes of the first outer side face in the first resin portion, when viewed in the first direction, inner edge of the sealing member is located inside with respect to outer edge of the current collector,
in at least the first portion, when viewed in the first direction, an inner edge of the sealing body coincides with the inner edge of the sealing member or is located outside with respect to the inner edge of the sealing member, and
in at least the first portion, when viewed in the first direction, at least part of inner edge of the spacer is located inside with respect to the inner edge of the sealing member.

2. The electric power storage module according to claim **1,** wherein
the four outer side faces include three second outer side faces as outer side faces different from the first outer side face, and
in second portion including the three second outer side faces in the first resin portion, when viewed in the first direction, the inner edge of the spacer is located inside with respect to the inner edge of the sealing member.

3. The electric power storage module according to claim 1 or 2, wherein
the sealing body includes an injection-molded resin portion welded to the first end face and the second end face in the first portion.

4. The electric power storage module according to any one of claims 1 to 3, wherein
the sealing body includes a laminate sheet including a metal layer and an insulating layer laminated on the metal layer, and
the laminate sheet is welded to the first end face and the second end face.

5. The electric power storage module according to any one of claims 1 to 4, wherein
the electrode stack includes a separator interposed between each of the electrodes adjacent in the first direction, and
an end portion of the separator is disposed between sealing member and the spacer in the first direction.
